# EUROPÄISCHE PATENTSCHRIFT

(11) **EP 2 452 069 B1**
(45) Veröffentlichungstag und Bekanntmachung des Hinweises auf die Patenterteilung: **21.09.2016**
(21) Anmeldenummer: 10776268.4
(22) Anmeldetag: 08.07.2010
(51) Int. Cl.: F03D 9/28, F16H 61/472, F16H 61/448, F03D 15/00

(54) **HYDROSTATISCHER ANTRIEB EINER WINDENERGIEANLAGE**
HYDROSTATIC DRIVE OF A WIND TURBINE
ENTRAÎNEMENT HYDROSTATIQUE POUR ÉOLIENNE

(30) Priorität: 09.07.2009 DE 102009033272; 09.07.2009 DE 202009009696 U
(43) Veröffentlichungstag der Anmeldung: 16.05.2012
(73) Patentinhaber: INW Beteiligungs GmbH, 22297 Hamburg (DE)
(72) Erfinder: MEUSER, Peter, 17036 Neubrandenburg (DE); TÜRK, Manfred, 17036 Neubrandenburg (DE); PLEIKIS, Torsten, 17036 Neubrandenburg (DE)
(74) Vertreter: Kietzmann, Manfred
(86) Internationale Anmeldenummer: PCT/DE2010/000808
(87) Internationale Veröffentlichungsnummer: WO 2011/003405

(56) Entgegenhaltungen:
- EP-A1- 2 261 503
- WO-A2-2008/113699
- US-A- 4 280 061
- US-A1- 2009 021 013
- US-A1- 2009 140 522
- US-B2- 7 418 820

## Beschreibung

Es ist bekannt, dass sich für konventionelle Windenergieanlagen als Antriebskonzepte der Antrieb mit mechanischem Getriebe und der getriebelose Direktantrieb überwiegend durchgesetzt haben.

Abgesehen von weiteren gravierenden Problemen, die bei diesen Antriebkonzepten bestehen, ist es damit nicht oder nur bedingt möglich, konventionelle Windenergieanlagen mit echten Kraftwerkseigenschaften, also Windkraftwerke, zu realisieren. Für den weiteren Ausbau der Windenergienutzung zur Stromerzeugung im Netzparallel- oder Inselbetrieb sind aber gerade diese echten Kraftwerkseigenschaften unverzichtbar.

Diese Kraftwerkseigenschaften werden in mehr als 99% der weltweit betriebenen konventionellen Kraftwerke dadurch realisiert, dass zur Stromerzeugung Synchrongeneratoren verwandt werden, die direkt auf das Netz oder an die Verbraucher geschaltet werden. Diese direkt gekoppelten Synchrongeneratoren benötigen zu ihrem Antrieb eine konstante Drehzahl.

Aus der WO 2008/113699 A2 ist eine Energieumwandlungsvorrichtung bekannt, bei der die Rotordrehzahl und die Antriebsdrehzahl eines Hydraulikmotors unabhängig voneinander regelbar sein sollen, um eine konstante Drehzahl der Antriebswelle eines Generators zu erreichen und dadurch den Einsatz von Synchrongeneratoren zu ermöglichen.

Die US 7 418 820 B2 beschreibt eine Windturbine, mit einer vom Rotor angetriebenen Hydraulikpumpe, die über einen geschlossenen Hydraulikkreislauf einen Generator antreibt.

Aus der US 2009/0140522 A ist ein Windkraftwerk bekannt mit einer vom Rotor angetriebenen Hydraulikpumpe und einem Hydraulikkreislauf zum Antrieb eines Verstellhydraulikmotors, der seinerseits einen Generator antreibt. Durch eine Steuerung des Volumenstroms wird eine Anpassung an die Netzfrequenz erreicht.
Die US 4 280 061 A beschreibt ein Windkraftwerk mit einem hydraulischen Generatorantrieb, bei dem eine Netzsynchronisation erreicht werden soll.
Das Windkraftwerksystem nach der US 2009/0021013 A1, bei dem ein Generator durch Windkraft angetrieben wird, sieht eine Leistungseinstellung vor, um die Größe des Gesamtstromes unter einen voreingestellten maximalen Betrag zu halten.
Die EP 22 61 503 A1 beschreibt eine Windturbine, die abtriebsseitig einen hydraulischen Fest- und einen hydraulischen Verstellmotor aufweist, um einen höheren Wirkungsgrad zu erzielen und Instabilität und Schwingungen zu verringern.

Aufgabe der Erfindung ist es, für einen hydrostatischen Antrieb eines Windkraftwerkes, das mit hohem Wirkungsgrad sowohl im Insel- als auch im Netzbetrieb arbeiten soll, eine Steuerung vorzuschlagen, die unter allen Windverhältnissen zuverlässig arbeitet und die auch als Phasenschiebermaschine einsetzbar ist.

Gelöst wird diese Aufgabe mit den Merkmalen des Vorrichtungsanspruches 1. Vorteilhafte Ausgestaltungen sind Gegenstand der Unteransprüche.

Das Schluckvolumen der Verstellhydromotoren wird durch eine Steuerung so eingestellt, dass im Inselbetrieb die Drehzahl der Antriebswelle des zugehörigen Synchrongenerators einen konstanten oder nahezu konstanten Wert annimmt, so dass die Synchrongeneratoren der Teilkreisläufen (T₁₋ₙ) ausgangsseitig direkt auf einen Verbraucher aufschaltbar sind.

Im Netzparallelbetrieb wird die Drehzahl der Synchrongeneratoren vom Netz bestimmt, so dass die Steuerung dann das Antriebsmoment der Generatorwellen so einstellt, dass ein Momentengleichgewicht zwischen dem Rotor und den Generatoren besteht.

Die Synchrongeneratoren sind somit in beiden Betriebsarten von der Rotordrehung unabhängig und können mit derjenigen Drehzahl drehen, die das Netz erzwingt bzw. die zu versorgenden Verbraucher erfordern.

Die dazu erforderliche Steuerung des Volumenstroms und des Betriebsdruckes im geschlossenen Hydrauliksystem wird durch die Verstellhydromotoren realisiert, deren Schluckvolumen durch eine elektrohydraulische Verstellung des Hubvolumens ihrer vorzugsweise Axialkolben sehr schnell und genau geregelt werden kann.

Das maximale Gesamtschluckvolumen in jedem Teilkreislauf (T₁₋ₙ) der Hydromotorenkombination ergibt sich aus der Summe der Schluckvolumina von Fest- und Verstellhydromotor bei 100% Verstellung, wobei das Schluckvolumen des Festhydromotors kleiner, höchstens jedoch gleich dem maximalen Schluckvolumen des Verstellhydromotors ist.

Von den Verstellhydromotoren der Hydromotorenkombination jedes Teilkreislaufes (T₁₋ₙ) ist der größere Teil, mindestens jedoch die Hälfte, des Volumenstromes im jeweiligen Teilkreislauf (T₁₋ₙ) aufzunehmen. Ober die Volumenstromregelung werden bei gegebenem Gesamtvolumenstrom der Systemdruck, damit das dem Rotor entgegengesetzte Drehmoment und letztlich die Drehzahl des Rotors unmittelbar beeinflusst. Dadurch werden die Leistungsregelung und ihre Begrenzung auf die Nennleistung des Windkraftwerkes vermittels gezielter Drehzahlsteuerung des Rotors möglich. Die gewünschte Drehzahl des Rotors kann jederzeit exakt eingehalten werden.

Ferner kann der hydrostatische Antrieb den Rotor direkt und praktisch verschleißfrei abbremsen, wenn es das Betriebsregime erfordert. Die dabei umgewandelte kinetische Energie des Rotors fällt kurzzeitig als Wärmeenergie im Hydrauliköl an und kann wegen der hohen, volumenbedingten Wärmekapazität des gesamten Hydrauliksystems problemlos abgeführt werden.

Hierbei handelt es sich um ein außerordentlich zuverlässiges, anlägenschonendes und von äußeren Einflüssen nahezu unabhängiges Verfahren, dessen Einsatz in der konventionelle Anlagentechnologie so nicht möglich ist. Diese Art der Leistungsregelung ermöglicht auch den Verzicht auf die mechanische Verstellung der Rotorblätter um ihre Längachse (Pitch).

Entsprechend angeordnete Überdruckventile im Hydrauliksystem des Hauptantriebes gestatten die Begrenzung des Öldruckes auf den auslegungsabhängigen Maximalwert. Ein den Öffnungsdruck übersteigende Systemdruck und damit ein überhöhtes Drehmoment als Gegenmoment für den Rotor sind damit sicher ausgeschlossen. Stattdessen wird der Rotor ein der Regel abgebremst werden. Das ist mit einer Verringerung seines aerodynamischen Wirkungsgrades verbunden. Er nimmt also infolge des Bremsvorganges bei verringerter Drehzahl weniger Energie aus dem Wind, so dass durch gezielte Bremsvorgänge die Anlagenleistung geregelt und begrenzt werden kann.

Für den Fall, dass das durch die Hydropumpe bei maximalem Druck dem Rotor entgegengebrachte Bremsmoment bei extremen Windböen nicht zu einer Reduzierung der Rotordrehzahl führt, weicht der Rotor zunächst in Richtung höherer Drehzahlen aus, die die Anlage jedoch nicht überlasten können und beim Überschreiten zulässiger Grenzwerte letztlich vom Sicherheitssystem pariert werden.

Die mit der Erfindung erzielten Vorteile bestehen insbesondere darin, dass es durch den Einsatz des erfindungsgemäßen hydrostatischen Antriebes möglich wird, Windkraftwerke mit echten Kraftwerkseigenschaften herzustellen und zu betreiben und diese Windkraftwerke selbst dann, wenn kein Wind weht und sie demzufolge keinen Strom erzeugen können, eine wertvolle Systemdienstleistung für das Netz, an das sie angeschlossen sind, erbringen, indem ihre Synchrongeneratoren motorisch als Phasenschiebermaschinen zugeschaltet werden und kapazitive oder induktive Blindleistung bis zur Größe ihrer Nennleistung liefern.

Der erfindungsgemäße hydrostatische Antrieb soll anhand von Ausführungsbeispielen erläutert werden. Es zeigen:
- Fig. 1:: Hydrostatischer Antrieb mit zwei geschlossenen Teilkreisläufen,
- Fig. 2:: Ventilblock und
- Fig. 3:: Hydrostatischer Antrieb mit einem geschlossenen Teilkreislauf.

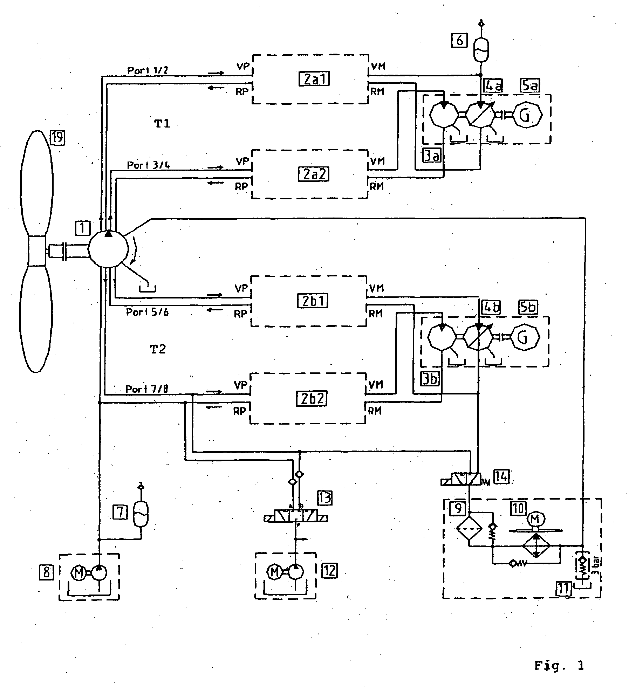

**Fig. 1** zeigt einen hydrostatischen Antrieb mit zwei geschlossenen Teilkreisläufen T1 und T2.

Der hydrostatische Antrieb ist seinem Wesen nach ein Fluidgetriebe, eingefügt in den Kraftfluss zwischen dem Rotor 19 und einem oder mehreren Synchrongeneratoren 5. Er besteht aus der Hydropumpe 1, den Ventilblöcken 2, den Hydromotoren 3 und 4, den Synchrongeneratoren 5, sowie dem Hydrauliksystem, bestehend aus dem Hochdruckspeicher 6, dem Niederdruckspeicher 7, der Speisepumpe 8, dem Rücklauffilter 9, dem Ölwärmetauscher 10, dem Druckbegrenzungsventil 11 und der Hochdruckpumpe 12 mit einem Umschaltventil zur Hochdruckeinspeisung 13 sowie dem Ausspülschaltventil 14.

Ein Hydromotor jedes Teilkreislaufes T1 und T2 ist ein Festhydromotor 3 und der andere ein Verstellhydromotor 4.
Die mechanisch mit dem Rotor 19 direkt verbundene Hydropumpe 1 wandelt die mechanische Energie des Rotors 19 verhältnismäßig verlustarm in hydraulische Strömungsenergie um und gibt sie über insgesamt 8 Ports, davon je 4 Ports für den Vorlauf VP und 4 Ports für den Rücklauf RP, an zwei separate geschlossene hydraulischen Teilkreisläufe T1 und T2 ab. In beiden Teilkreisläufen wird die Strömungsenergie je einer Hydromotorkombination aus dem Festhydromotor 3 und dem Verstellhydromotor 4 zugeführt, die sie wieder in mechanische Energie zum Antrieb der mit den Hydrömotorenkombinationen verbundenen Synchrongeneratoren 5 umwandeln.

Die Synchrongeneratoren 5 führen die letzte Energiewandlung in Elektroenergie durch. Diese wird direkt ins Netz eingespeist oder aber an die angeschlossenen Verbraucher abgegeben.
Als Hydropumpe 1 wird eine langsam laufende hydraulische Verdrängerpumpe, vorzugsweise eine Radialkolbenpumpe, verwendet. Sie ist bevorzugt so dimensioniert, dass ihre Drehzahl-Drehmoment-Kennlinie möglichst genau der des Rotors 19 bei optimalem Gesamtwirkungsgrad der Hydropumpe 1 entspricht.'
Die Hydromotorkombinationen bestehen aus je einem Festhydromotor 3 in Schrägscheiben- oder Schrägkolbenausführung und einem Verstellhydromotor 4, vorzugsweise in Schrägscheibenausführung.

Die Verstelleinheiten zur elektrohydraulischen Steuerung des Schluckvolumens der Verstellhydromotoren 4 bilden mit diesen eine konstruktive Einheit.
Jeweils eine Hydromotorkombination 3, 4 ist mit je einem Synchrongenerator 5 mechanisch verbunden. Dazu ist das Gehäuse der Hydromotorkombination 3, 4 über einen Motorträger fest mit dem Gehäuse des Synchrongenerators 5 verbunden, vorzugsweise verschraubt. Die Wellen der Hydromotoren sind untereinander starr verbunden und die Abtriebswelle der Hydromotorkombination 3, 4 und die Antriebswelle des Synchrongenerators 5 verbindet bevorzugt eine elastische Kupplung.
Der Verstellhydromotor 4 und der Festhydromotor 3 jedes Teilkreislaufes T1 und T2 verfügen jeweils über einen hochdruckseitigen Vorlauf (VM) und einen niederdruckseitigen Rücklauf (RM), die indirekt über den Ventilblock 2 mit der Hydropumpe 1 verbunden sind.

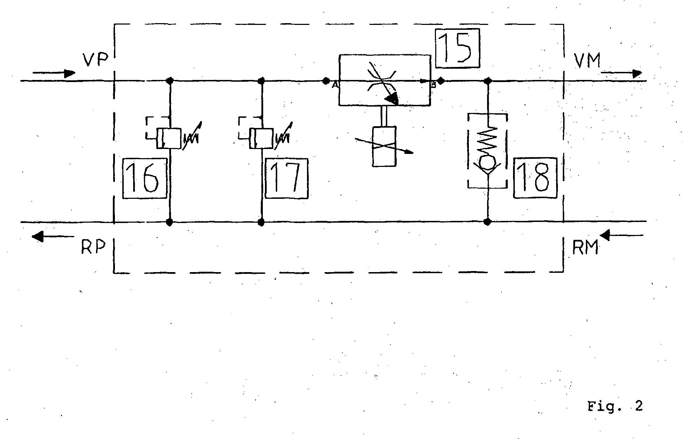

Zwischen der Hydropumpe 1 und jeder Hydromotorkombinaton 3, 4 ist je ein Ventilblock 2 zwischengeschaltet. Dieser ist in **Fig. 2** gezeigt.
Hochdruckseitig ist in den Weg Vorlauf VP - VM ein Proportionalstromregelventil 15 geschaltet, mit dem der Vorlauf ganz oder teilweise gesperrt werden kann. Pumpenseitig vor dem Proportionalstromregelventil 15 verbinden ein Überdruckventil 16 und ein Sicherheitsüberdruckventil 17 durch jeweils eine parallele Schaltung den hochdruckseitigen Vorlauf mit dem niederdruckseitigen Rücklauf. Diese beiden Ventile sind dafür zuständig, dass in den angeschlossenen Teilkreisläufen T1 und T2 ein höchstzulässiger Systemdruck nicht überschritten wird und damit eine Überlastung des Windkraftwerkes durch äußere Einwirkung praktisch ausgeschlossen ist.

Motorseitig verbindet ein Nachsaugventil 18 den vorlauf und den Rücklauf. Dieses Nachsaugventil 18 sorgt dafür, dass beim Übergang des angeschlossenen Synchrongenerators 5 vom generatorischen in den motorischen Betrieb die Versorgung mit Speiseöl aufrecht erhalten bleibt. Gleichermaßen sichert es den gewollten motorischen Betrieb des Synchrongenerators 5, wenn dieser bei stehendem Rotor 19 motorisch als Phasenschiebermaschine arbeiten soll.

Ein oder auch mehrere Hochdruckspeicher 6, angeschlossene auf der Hochdruckseite mindestens eines der geschlossenen Teilkreisläufe T1 bzw. T2, dienen als Schockspeicher und sichern bei sehr schnellen Lastspitzen, die vom Rotor 19 ausgehen können, ein adäquates Reagieren der Betriebsführung des Windkraftwerkes. Darüber hinaus sind sie verantwortlich für eine bestimmungsgemäße Einstellung der Eigenfrequenz des gesamten hydrostatischen Antriebs, die so erfolgen muss, dass Eigenresonanzen während des Betriebes sicher vermieden werden.

Ein oder mehrere auf der Niederdruckseite mindestens eines der geschlossenen Teilkreisläufe T1 und T2 angeschlossene Niederdruckspeicher 7 gewährleisten, dass für das bestimmungsgemäße Füllen des Hochdruckspeichers 6 bzw. der Hochdruckspeicher 6 genügend Öl im geschlossenen System zur Verfügung steht.

Die Speisepumpe 8 sichert während des Betriebes die Versorgung der geschlossenen Teilkreisläufe T1 und T2 mit Speiseöl. Ihre Fördermenge ist so bemessen, dass einerseits die Leckölverluste der Hydropumpe 1 und der Hydromotoren 3,4 nachgeführt werden. Andererseits wird der Hydropumpe 1 ein Überschuss an gekühltem Speiseöl aus dem Tank zugeführt, das hinter den Hydromotoren 3,4 bei nicht geschaltetem Ausspülschaltventil 14 in gleicher Menge wieder ausgespült wird.

Das ausgespülte Öl durchläuft den Rücklauffilter 9, der es von mitgeführten Partikeln reinigt, durchläuft den Ölwärmetauscher 10, wo es gekühlt wird, und gelangt über das Druckbegrenzungsventil 11 wieder in den Tank zurück.

Oberhalb des Druckbegrenzungsventils 11 wird ein Teil des gereinigten und gekühlten Olvolumenstroms abgezweigt und über das Gehäuse der Hydropumpe 1 in den Tank geleitet, wodurch eine Gehäusespülung der Hydropumpe 1 zur Zusätzlichen Kühlung erreicht wird.

Ein umschaltbarer Abgang der Hochdruckpumpe 12, die für die Versorgung anderer Aggregate des Windkraftwerkes ohnehin vorhanden ist, ist je nach Stellung des Umschaltventils der Hochdruckeinspeisung 13 in Ruhestellung gesperrt oder aber entweder mit der Niederdruckseite oder der Hochdruckseite der geschlossenen. Teilkreisläufen T1 und T2 verbunden.

Diese Anordnung erfüllt zwei Funktionen:

Bei vollständig geschlossenen Proportionalstromregelventilen 15 in allen Ventilblöcken 2, gelüfteter mechanischer Rotorbremse, Verbindung der Hochdruckpumpe 12 mit der Niederdruckseite und Verbindung der Hochdruckseite durch das Ausspülschaltventil 14 mit dem Rücklauffilter 9 wird die Hydropumpe 1 unter dem Einfluss des Volumenstromes der Hochdruckpumpe 12 zu einem langsam laufenden Hydromotor im offenen Hydraulikkreis, der den Rotor 19 auf eine für dessen schnellen Hochlauf günstige Anfangsdrehzahl bringt.
Das ist insbesondere dann unverzichtbar, wenn ein Windkraftwerke mit Zweiblattrotor über kein Pitchsystem verfügt, weil dann der selbständige Hochlauf des Rotors 19, wenn überhaupt, dann erst bei sehr hohen Windgeschwindigkeiten möglich wäre.

Bei vollständig geöffneten Proportionalstromregelventilen 15 in einem oder mehreren Ventilblöcken 2, angezogener mechanischer Rotorbremse, Verbindung der Hochdruckpumpe 12 mit der Hochdruckseite und Verbindung der Niederdruckseite durch das Ausspülschaltventil 14 mit dem Rücklauffilter 9 werden die zugehörigen Hydromotorkombinationen 3, 4 bei stehendem Rotor 19 unter dem Einfluss des volumenstromes der Hochdruckpumpe 12 im offenen Hydraulikkreis angetrieben und sorgen für den leistungslosen Hochlauf der zugehörigen Synchrongeneratoren 5 bis auf Nenndrehzahl im generatorischen Betrieb. Sie können dann an das Netz ansynchronisiert werden, gehen anschließend in den motorischen Betrieb über und arbeiten als Phasenschiebermaschinen. Gleichzeitig damit gehen die Hydromotoren 3,4 in den Pumpenbetrieb über, der durch die Nachsaugventile .18 in den Ventilblöcken 2 hinsichtlich der Speiseölversorgung gesichert ist, und laufen im Leerlauf mit. Ein Anlauf der Synchrongeneratoren als Motoren aus dem Stillstand wäre ansonsten nicht möglich.

Die Synchrongeneratoren 5 wandeln die mechanische Antriebsenergie der Hydromotoren 3,4 in elektrische Energie um. Zum Einsatz kommen bürstenlose Drehstromsynchrongeneratoren mit rotierendem Erregersystem.

Die Erregung der Synchrongeneratoren 5 wird vom Betriebsführungssystem sowohl während des Produktionsbetriebes als auch im Phasenschieberbetrieb zweckentsprechend gesteuert. Gleiches gilt für die Ansynchronisation der Synchrongeneratoren 5 untereinander, an ein bestehendes Netz bzw. andere Windkraftwerke oder Elektrogeneratoren.

Die Synchrongeneratoren 5 arbeiten im Produktionsbetrieb mit fester Drehzahl. Das erfolgt völlig unabhängig von der jeweiligen Drehzahl des Rotors 19 des Mindkraftwerkes. Die dazu erforderliche Steuerung der Verstellhydromotoren 4 in Abhängigkeit vom Volumenstrom erfolgt durch das Betriebsführungssystem. Die Synchrongeneratoren 5 können auch mit variabler Drehzahl arbeiten, wenn die angeschlossenen Verbraucher das erfordern.

Bei Netzparallelbetrieb wird der Leistungsfaktor cos ϕ als Maß des Verhältnisses von Wirk- zu Blindleistung sowohl im Produktionsbetrieb als auch im Phasenschieberbetrieb durch die entsprechende Einstellung der Erregerspannung der Synchrongeneratoren 5 vom Betriebsführungssystem bedarfsgerecht vorgenommen.

Im Inselbetrieb oder bei Betrieb in lokalen Netzen ist es möglich, dass nicht die gesamte Elektroenergie, die das Windkraftwerk bei gegebener Windgeschwindigkeit liefern könnte, auch tatsächlich abgenommen werden kann. Liegt dieser Leistungsbedarf unterhalb der Leistungskennlinie für den Ein-Generator-Betrieb, ist es möglich, mit nur einem Synchrongenerator 5 bis hin zu dessen maximaler Leistung zu arbeitender Rotor 19 arbeitet mit entsprechend geringerer Drehzahl und die Hydropumpe 1 wegen des geringeren Volumenstromes nur mit einem geschlossenen Teilkreislauf T1 oder T2.

Die in den Teilkreisläufen T1 und T2 anfallende Verlustwärme wird über den Ölwärmetauscher 10 abgeführt Besteht am Standort kein Wärmebedarf, kommen Öl-Luft-Wärmetauscher zum Einsatz. Ansonsten wird die Verlustwärme über Öl-Wasser-Wärmetauscher einem Heizkreislauf am Standort zugeführt. Umgekehrt kann über diesen Weg auch bei extrem tiefen Temperaturen die minimale Betriebstemperatur des Windkraftwerke durch Zuführung von Wärme aus *diesem* Heizkreis sehr viel schneller hergestellt werden, als das Windkraftwerk aus eigener Kraft dazu in der Lage wäre.

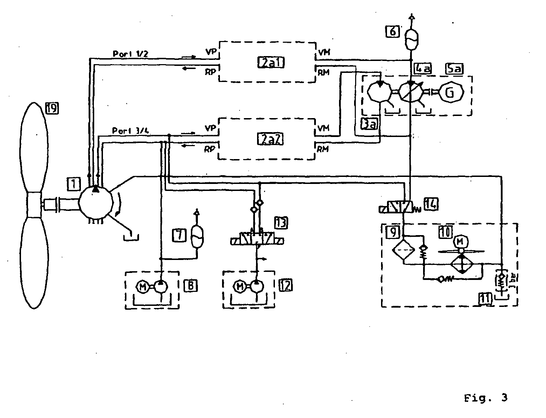

Ein zweites Ausführungsbeispiel der Erfindung ist in der **Fig. 3** dargestellt.

Es unterscheidet sich vom ersten Ausführungsbeispiel dadurch, dass nur ein geschlossener hydraulischer Kreislauf T1 und damit auch nur ein Synchrongenerator 5 vorhanden sind. Die Funktion unterscheidet sich nicht vom ersten Ausführungsbeispiel, lediglich die auf dem Vorhandensein von zwei Synchrongeneratoren 5 beruhenden Besonderheiten sind hier nicht gegeben.

Diese Art der Ausführung ist vorzugsweise für Windkraftwerke mit Nennleistungen bis zu etwa 100 kW zu bevorzugen. Die Ausführung mit zwei Synchrongeneratoren 5 ist bis zu etwa 1.000 kW Nennleistung realisierbar. Bei Windkraftwerken mit noch größeren Nennleistungen ist der Einsatz von mehr als zwei Synchrongeneratoren 5 vorteilhaft.

Im Allgemeinen aber ist die Anzahl der Synchrongeneratoren 5 beliebig und wird letztlich durch wirtschaftliche und technische Anforderungen an das Windkraftwerk bestimmt.

### Bezugszeichenliste

- 1: Hydropumpe
- 2: Ventilblock
- 3: Hydromotor als Festmotor
- 4: Hydromotor als Verstellmotor
- 5: Synchrongenerator
- 6: Hochdruckspeicher
- 7: Niederdruckspeicher
- 8: Speisepumpe
- 9: Rücklauffilter
- 10: Ölwärmetauscher
- 11: Druckbegrenzungsventil
- 12: Hochdruckpumpe.
- 13: Umschaltventil der Hochdruckeinspeisung
- 14: Ausspülschaltventil
- 15: Proportionalstromregelventil
- 16: Überdruckventil
- 17: Sicherheitsüberdruckventil
- 18: Nachsaugventil
- 19: Rotor

## Patentansprüche

1. Hydrostatischer Antrieb eines Windkraftwerkes, bestehend mindestens aus einem Rotor (19), der durch die Windenergie antreibbar ist, zum Erzeugen einer Rotation einer mit dem Rotor (19) verbundenen Rotorwelle, aus einer über die Rotorwelle antreibbaren Hydropumpe (1) zum Umwandeln der Rotationsenergie der Rotorwelle in hydraulische Energie und aus einer Hydromotorenkombination (3, 4), aus einem Festhydromotor (3) und einem Verstellhydromotor (4), die über Hydraulikleitungen (VP, VM, RP, RM) mit der Hydropumpe (1) verbunden und von dieser dadurch antreibbar sind, wobei in der Hydromotorenkombination (3, 4) ein Umwandeln der hydrostatischen Energie in eine Rotationsbewegung erfolgt und diese Bewegung der eine gemeinsame Welle aufweisenden oder starr gekoppelten Hydromotorenkombination (3, 4) auf eine Antriebswelle eines Synchrongenerators (5) des hydrostatischen Antriebs übertragbar ist zum Erzeugen von elektrischer Energie,
wobei
der hydrostatische Antrieb in einer ersten Ausgestaltung einen geschlossenen hydraulischen Kreislauf (T₁) umfasst oder alternativ in einer zweiten Ausgestaltung mehrere geschlossene hydraulische Teilkreisläufe (T₁₋ₙ) umfasst, auf welche der von der Hydropumpe (1) geförderte Gesamtvolumenstrom aufgeteilt ist, wobei der Kreislauf (T₁) bzw. jeder Teilkreislauf (T₁₋ₙ) über ein Proportionalregelventil (15) zum Sperren oder teilweisen Sperren des Volumenstromes verfügt und eine Hydromotorenkombination (3, 4) mit je einem Verstellhydromotor (4) und einem Festhydromotor (3) aufweist, wobei der Verstellhydromotor (4) und der Festhydromotor (3) jedes Kreislaufes (T₁₋ₙ) jeweils über einen eigenen hochdruckseitigen Vorlauf (VP) von der Hydropumpe (1) und einen eigenen niederdruckseitigen Rücklauf (RP) zur Hydropumpe (1) verfügen, wobei der hydrostatische Antrieb eine Steuerung umfasst, die konfuguriert ist, das Schluckvolumen des bzw. der Verstellhydromotoren (4) so einzustellen, dass die Drehzahl der Antriebswelle des zugehörigen Synchrongenerators (5) einen im Inselbetrieb konstanten Wert annimmt, so dass der Synchrongenerator (5) jedes Kreislaufs (T₁₋ₙ) ausgangsseitig direkt auf die Verbraucher aufschaltbar ist und sich im Netzparallelbetrieb bei konstanter, vom Netz bestimmter Drehzahl ein Leistungsgleichgewicht zwischen der vom Rotor (19) aus dem Wind aufgenommenen Leistung und der von dem bzw. von den Synchrongeneratoren (5) abgegeben Leistung unter Berücksichtigung der Umwandlungsverluste im hydrostatischen Antrieb und in dem bzw. den Synchrongeneratoren (5) einstellt, wobei für jeden Kreislauf (T₁₋ₙ) gilt, dass die hydraulische Verbindung vom Festhydromotor (3) von und zur Hydropumpe (1) indirekt über einen ersten Ventilblock (2a1) und die hydraulische Verbindung vom Verstellhydromotor (4) von und zur Hydropumpe (1) indirekt über einen zweiten Ventilblock (2a2) erfolgt, wobei in dem jeweiligen Ventilblock im jeweiligen hochdruckseitigen Vorlauf (VP) das Proportionalstromregelventil (15) in Reihe mit dem Volumenstrom angeordnet ist und in dem hydromotorenseitig nach dem Proportionalstromregelventil (15) ein parallel geschaltetes, den hochdruckseitigen Vorlauf (VM) und den niederdruckseitigen Rücklauf (RM) verbindendes Nachsaugventil (18) angeordnet ist, das bei einem Übergang des angeschlossenen Synchrongenerators (5) vom generatorischen in den motorischen Betrieb die Versorgung mit Speiseöl aufrecht erhalten kann und den gewollten motorischen Betrieb des Synchrongenerators (5) sichern kann, wenn dieser bei stehendem Rotor (19) motorisch als Phasenschiebermaschine arbeitet, wobei in jedem Ventilblock pumpenseitig vor dem Proportional stromregelventil (15) ein parallel geshaltetes, den hochdruckseitigen vorlauf (VM) und den niederdruckseitigen Rücklauf (RM) verbindendes Überdruckventil (16) und Sicherheitsüberdruckventil (17) angeordnet ist.

2. Hydrostatischer Antrieb nach Anspruch 1, **dadurch gekennzeichnet, dass**
mindestens einer der Kreisläufe (T₁₋ₙ) hochdruckseitig im Vorlauf (VM) mit mindestens einem Hochdruckspeicher (6) versehen ist, der zur Einstellung der Eigenfrequenz des hydrostatischen Antriebs und zum Ausregeln von Lastspitzen dient.

3. Hydrostatischer Antrieb nach einem der Ansprüche 1 oder 2, **dadurch gekennzeichnet**, das
die Hydropumpe (1) eine langsam laufende Radialkolbenpumpe zum Speisen der Kreisläufe (T₁₋ₙ) ist, die so dimensioniert ist, dass ihre Drehzahl-Drehmoment-Kennlinie der des Rotors (19) bei optimalem oder angenähert optimalem Wirkungsgrad der Radialkolbenpumpe entspricht.

4. Hydrostatischer Antrieb nach einem der Ansprüche 1 bis 3, **dadurch gekennzeichnet, dass**
sich in jedem Kreislauf (T₁₋ₙ) das maximale Gesamtschluckvolumen der Hydromotorenkombination (3, 4) aus der Summe der Schluckvolumina von Fest- und Verstellhydromotor (3, 4) bei 100%iger Verstellung ergibt, wobei das Schluckvolumen des Festhydromotors (3) kleiner, höchstens gleich dem maximalen Schluckvolumen des Verstellhydromotors (4) ist.

5. Hydrostatischer Antrieb nach einem der Ansprüche 1 bis 4, **dadurch gekennzeichnet, dass**
von den Verstellhydromotoren (4) der Hydromotorenkombination (3, 4) eines jeden Kreislaufes (T₁₋ₙ) der größere, mindestens jedoch der halbe Teil des Volumenstromes im jeweiligen Kreislauf (T₁₋ₙ) aufnehmbar ist.

6. Hydrostatischer Antrieb nach einem der Ansprüche 1 bis 5, **dadurch gekennzeichnet, dass**
niederdruckseitig im Rücklauf (RP) in mindestens einem Kreislauf (T₁₋ₙ) ein geringfügig vorgespannter Niederdruckspeicher (7) angeordnet ist.

7. Hydrostatischer Antrieb nach einem der Ansprüche 2 bis 6, **dadurch gekennzeichnet, dass**
der direkt an die Hochdruckseite (VM) eines Teilkreislaufes (T₁₋ₙ) angeschlossener Hochdruckspeicher (6) so bemessen ist, dass er einen plötzlich auftretenden Druckanstieg im Sinne eines Schockspeichers aufnimmt und kompensiert, die Eigenfrequenz des hydrostatischen Antriebs aus dem Bereich der Anregungsfrequenz durch den drehenden Rotor (19) infolge dessen Durchlaufes durch die Staudruckzone vor dem Turm ausreichend verschiebt sowie Pendelungen der Synchrongeneratoren (5) infolge des Ausregelns von Lastschwankungen im Netz oder bei den Verbrauchern weitestgehend verhindert.

8. Hydrostatischer Antrieb nach einem der Ansprüche 1 bis 7, **dadurch gekennzeichnet, dass**
das jeweils in den Kreisläufen (T₁₋ₙ) angeordnete Überdruckventil (16) so einstellbar ist, dass es selbsttätig bei Erreichen seines Ansprechdrucks öffnet, um den maximalen Druck auf der Hochdruckseite (VP) und damit das maximal von der Hydropumpe (1) dem Rotor (19) entgegengesetzte Drehmoment zu begrenzen, wobei im Falle des Versagens des Überdruckventils (16) durch das Sicherheitsüberdruckventil (17) dessen Funktion selbsttätig übernehmbar ist.

9. Hydrostatischer Antrieb nach einem der Ansprüche 6, bis 8, **dadurch gekennzeichnet, dass**
der an die Niederdruckseite (RP) des hydraulischen Kreislaufes (T₁₋ₙ) angeschlossene geringfügig vorgespannte Niederdruckspeicher (7) so bemessen ist, dass durch den Niederdruckspeicher (7) das zur Füllung des Hochdruckspeichers (6) erforderliche Ölvolumen unabhängig vom Speisesystem bereitstellbar ist.

10. Hydrostatischer Antrieb nach einem der Ansprüche 1 bis 9, **dadurch gekennzeichnet, dass**
bei völligem Stillstand des Rotors (19) im angebremsten Zustand, beispielweise bei Sturmsicherung oder bei Flaute, mindestens ein Synchrongenerator (5) als Phasenschiebermaschine parallel zum Netz im motorischen, übererregten oder untererregten Betrieb einsetzbar ist, so dass er Blindarbeit leistet.

11. Hydrostatischer Antrieb nach einem der Ansprüche 1 bis 10, **dadurch gekennzeichnet, dass**
die Hydropumpe (1) in den Motorbetrieb überführbar ist, wodurch dem Rotor,(19) eine für den Hochlauf sinnvolle Mindestdrehzahl aufgeprägbar ist, die insbesondere dann erforderlich sein kann, wenn die Rotorblätter nicht mittels Pitch verstellbar sind oder werden.

## Claims

1. A hydrostatic drive of a wind turbine, consisting of at least one rotor (19), which can be driven by wind energy, for generating a rotation of a rotor shaft connected to the rotor (19), a hydraulic pump (1), which can be driven by means of the rotor shaft, for converting the rotational energy of the rotor shaft into hydraulic energy and a hydraulic motor combination (3, 4) having a fixed hydraulic motor (3) and an adjustable hydraulic motor (4), which are connected via hydraulic hoses (VP, VM, RP, RM) of the hydraulic pump (1) and which can therefore be driven by the latter, wherein the hydrostatic energy is converted in the hydraulic motor combination (3, 4) into a rotational movement and this movement of the hydraulic motor combination (3, 4) which comprises a common shaft or is rigidly coupled can be transferred to a drive shaft of a synchronous generator (5) of the hydrostatic drive in order to generate electrical energy,
wherein
the hydrostatic drive in a first configuration includes a closed hydraulic circuit (T₁) or, alternatively, in a second configuration, includes a plurality of closed hydraulic sub-circuits (T₁₋ₙ), to which the total volumetric flow conveyed by the hydraulic pump (1) is distributed, wherein the circuit (T₁) or each sub-circuit (T₁₋ₙ) has a proportional control valve (15) for blocking or partially blocking the volumetric flow and a hydraulic motor combination (3, 4) each having an adjustable hydraulic motor (4) and a fixed hydraulic motor (3), wherein the adjustable hydraulic motor (4) and the fixed hydraulic motor (3) of each circuit (T₁₋ₙ) each have their own flow (VP) on the high-pressure side from the hydraulic pump (1) and their own return (RP) on the low-pressure side to the hydraulic pump (1), wherein the hydrostatic drive includes a controller which is configured to set the displacement of the adjustable hydraulic motor(s) such that, during isolated operation, the rotational speed of the drive shaft of the associated synchronous generator (5) assumes a constant value so that the synchronous generator (5) of each circuit (T₁₋ₙ) can be connected directly to the consumers on the output side and, during operation in parallel with a network, at a constant rotational speed determined by the network, a power equilibrium is set between the power received by the rotor (19) from the wind and the power output by the synchronous generator(s) (5), taking account of the conversion losses in the hydrostatic drive and in the synchronous generator(s) (5), wherein it is true of each circuit (T₁₋ₙ) that the hydraulic connection of the fixed hydraulic motor (3) from and to the hydraulic pump (1) is effected indirectly via a first valve block (2a1) and the hydraulic connection of the adjustable hydraulic motor (4) from and to the hydraulic pump (1) is indirectly effected via a second valve block (2a2), wherein the proportional current control valve (15) is arranged in series with the volumetric flow in the respective valve block in the respective flow (VP) on the high-pressure side and in which a parallel connected anti-cavitation valve (18) connecting the flow (VM) on the high-pressure side and the return (RM) on the low-pressure side is arranged on the hydraulic motor side downstream of the proportional current control valve (15), which anti-cavitation valve can maintain the supply with supply oil during a transition of the connected synchronous generator (5) from generator-driven to motor-driven operation and can secure the desired motor-driven operation of the synchronous generator (5), when the latter is operating in a motor-driven manner with a stationary rotor (19) as a phase shifting machine, wherein a parallel connected pressure relief valve (16) connecting the flow (VM) on the high-pressure side and the return (RM) on the low-pressure side and a safety relief valve (17) are arranged in each valve block on the pump side upstream of the proportional current control valve (15).

2. The hydrostatic drive according to Claim 1, **characterized in that** at least one of the circuits (T₁₋ₙ) is equipped on the high pressure side in the flow (VM) with at least one high-pressure accumulator (6) which serves to adjust the natural frequency of the hydrostatic drive and to regulate peak loads.

3. The hydrostatic drive according to any one of Claims 1 or 2, **characterized in that** the hydraulic pump (1) is a slowly operating radial piston pump for supplying the circuits (T₁₋ₙ), which is dimensioned such that its rotational speed-torque characteristic curve corresponds to that of the rotor (19) at the optimum or approximately optimum efficiency of the radial piston pump.

4. The hydrostatic drive according to any one of Claims 1 to 3, **characterized in that** in each circuit (T₁₋ₙ) the maximum total displacement of the hydraulic motor combination (3, 4) is the product of the sum of displacements of the fixed and adjustable hydraulic motors (3, 4) at 100% adjustment, wherein the displacement of the fixed hydraulic motor (3) is smaller, or at most equal to the maximum displacement of the adjustable hydraulic motor (4).

5. The hydrostatic drive according to any one of Claims 1 to 4, **characterized in that** the larger portion, but at least half, of the volumetric flow in the respective circuit (T₁₋ₙ) can be received by the adjustable hydraulic motors (4) of the hydraulic motor combination (3, 4) of each circuit (T₁₋ₙ).

6. The hydrostatic drive according to any one of Claims 1 to 5, **characterized in that** a slightly preloaded low-pressure accumulator (7) is arranged on the low-pressure side in the return (RP) in at least one circuit (T₁₋ₙ).

7. The hydrostatic drive according to any one of Claims 2 to 6, **characterized in that** the high-pressure accumulator (6) connected directly to the high-pressure side (VM) of a subcircuit (T₁₋ₙ) is dimensioned such that it receives and compensates for a suddenly occurring pressure increase within the meaning of a shock accumulator, sufficiently displaces the natural frequency of the hydrostatic drive from the region of the excitation frequency due to the turning rotor (19) as a result of the passage of the latter through the stagnation pressure zone upstream of the tower and prevents fluctuations of the synchronous generator (5) as a result of regulating fluctuations in load in the network or in the consumers to the greatest possible extent.

8. The hydrostatic drive according to any one of Claims 1 to 7, **characterized in that** the pressure relief valve (16) arranged in each of the circuits (T₁₋ₙ) can be set such that it automatically opens on reaching its response pressure, in order to limit the maximum pressure on the high pressure side (VP) and, thus, the maximum torque offered by the hydraulic pump (1) in reply to the rotor (19), wherein in the event of the pressure relief valve (16) failing, the function thereof can be automatically assumed by the safety relief valve (17).

9. The hydrostatic drive according to any one of Claims 6 to 8, **characterized in that** the slightly preloaded low-pressure accumulator (7) connected to the low-pressure side (RP) of the hydraulic circuit (T₁₋ₙ) is dimensioned such that the volume of oil required to fill the high-pressure accumulator (6) can be provided by the low-pressure accumulator (7) independently of the supply system.

10. The hydrostatic drive according to any one of Claims 1 to 9, **characterized in that** if the rotor (19) is completely stopped in the braked condition, for example in the event of overspeed protection or in the event of it being dead calm, at least one synchronous generator (5) can be used as a phase shifting machine (5) parallel to the network during motor-driven, overexcited or underexcited operation, so that it provides reactive energy.

11. The hydrostatic drive according to any one of Claims 1 to 10, **characterized in that** the hydraulic pump (1) can be transferred to motor operation, as a result of which a reasonable minimum rotational speed for start-up can be imprinted on the rotor (19), which rotational speed may in particular be required, if it is or becomes impossible to adjust the rotor blades using the pitch.

## Revendications

1. Entraînement hydrostatique d'une centrale éolienne, composé d'au moins un rotor (19) qui peut être entraîné par l'énergie éolienne pour la production d'une rotation d'un arbre de rotor raccordé au rotor (19), d'une pompe hydraulique (1) pouvant être entraînée par le biais de l'arbre du rotor pour la conversion de l'énergie de rotation de l'arbre du rotor en énergie hydraulique et d'une combinaison de moteurs hydrauliques (3. 4), d'un moteur hydraulique fixe (3) et d'un servomoteur (4) hydraulique qui sont raccordés à la pompe hydraulique (1) par le biais de conduites hydrauliques (VP, VM, RP, RM) et qui peuvent de ce fait être entraînés par cette pompe, une conversion de l'énergie hydrostatique en un mouvement de rotation s'effectuant dans la combinaison de moteurs hydrauliques (3, 4), et ce mouvement de la combinaison de moteurs hydrauliques (3, 4) présentant un arbre commun ou accouplée de façon rigide pouvant être transmis à un arbre d'entraînement d'un générateur synchrone (5) de l'entraînement hydrostatique pour la production d'énergie électrique,
l'entraînement hydrostatique comprenant, dans une première forme de réalisation, un circuit (T₁) hydraulique fermé ou bien, dans une deuxième forme de réalisation, plusieurs circuits partiels (T₁₋ₙ) hydrauliques résultant de la division du débit volumique total transporté par la pompe hydraulique (1) est divisé, le circuit (T₁) ou respectivement chaque circuit partiel (T₁₋ₙ) disposant d'une soupape de régulation proportionnelle (15) destinée à bloquer ou à bloquer partiellement le débit volumique, et présentant une combinaison de moteurs hydrauliques (3, 4) avec respectivement un servomoteur (4) hydraulique et un moteur hydraulique fixe (3), le servomoteur (4) et le moteur hydraulique fixe (3) de chaque circuit partiel (T₁₋ₙ) disposant respectivement d'un propre aller (VP), côté haute pression, venant de la pompe hydraulique (1) et d'un propre retour (RP), côté base pression, dirigé vers la pompe hydraulique (1), l'entraînement hydrostatique comprenant une commande qui est configurée pour régler le volume d'absorption du ou respectivement des servomoteurs (4) de telle sorte que la vitesse de rotation de l'arbre d'entraînement du générateur synchrone (5) correspondant adopte une valeur constante dans le fonctionnement en îlotage de telle sorte que le générateur synchrone (5) de chaque circuit (T₁₋ₙ) peut, côté sortie, être branché directement sur les consommateurs et que, dans le fonctionnement parallèle au réseau, pour une vitesse de rotation constante, définie par le réseau, il s'installe un équilibre de puissance entre la puissance absorbée par le rotor (19) en provenance du vent et la puissance délivrée par le ou respectivement par les générateurs synchrones (5), avec prise en compte des pertes de conversion dans l'entraînement hydrostatique et dans le ou respectivement les générateurs synchrones (5), et, pour chaque circuit (T₁₋ₙ), le raccordement hydraulique du moteur hydraulique fixe (3) à partir de et vers la pompe hydraulique (1) s'effectue indirectement par le biais d'un premier bloc de soupapes (2a1), et le raccordement hydraulique du servomoteur hydraulique (4) à partir de et vers la pompe hydraulique (1) s'effectue indirectement par le biais d'un deuxième bloc de soupapes (2a2), la soupape de régulation proportionnelle (15) étant, dans l'aller (VP) respectif côté haute pression, disposée en série avec le débit volumique, et une soupape de ré-aspiration (18) montée en parallèle, raccordant l'aller (VM) côté haute pression et le retour (RM) côté basse pression, étant disposée côté moteur hydraulique en aval de la soupape de régulation proportionnelle (15), soupape de ré-aspiration qui, lors d'une transition du générateur synchrone (5) connecté à partir du fonctionnement en générateur vers le fonctionnement en moteur, peut maintenir l'alimentation en huile d'alimentation et assurer le fonctionnement en moteur souhaité du générateur synchrone (5) quand celui-ci fonctionne en moteur en tant que machine déphaseuse avec le rotor (19) immobile, une soupape de surpression (16) et une soupape de surpression de sûreté (17) montées en parallèle côté pompe en amont de la soupape de régulation proportionnelle (15) et raccordant l'aller (VM) côté haute pression et le retour (RM) côté basse pression étant disposées dans chaque bloc de soupapes.

2. Entraînement hydrostatique selon la revendication 1, **caractérisé en ce**
**qu'**au moins un des circuits (T₁₋ₙ) est, côté haute pression, dans l'aller (VM), muni d'au moins un accumulateur haute pression (6) qui sert au réglage de la fréquence propre de l'entraînement hydrostatique et à la régulation de pics de charge.

3. Entraînement hydrostatique selon l'une des revendications 1 ou 2, **caractérisé en ce que**
la pompe hydraulique (1) est une pompe à piston radial à marche lente destinée à alimenter les circuits (T₁₋ₙ) qui est dimensionnée de telle sorte que sa courbe caractéristique vitesse de rotation-couple correspond à celle du rotor (19) en présence d'un rendement optimal ou approximativement optimal de la pompe à piston radial.

4. Entraînement hydrostatique selon l'une des revendications 1 à 3, **caractérisé en ce que**, dans chaque circuit (T₁₋ₙ), le volume d'absorption total de la combinaison de moteurs hydrauliques (3, 4) résulte de la somme des volumes d'absorption du moteur hydraulique fixe (3) et du servomoteur hydraulique (4) pour un déplacement à 100%, le volume d'absorption du moteur hydraulique fixe (3) étant inférieur, au maximum égal au volume d'absorption maximal du servomoteur hydraulique (4).

5. Entraînement hydrostatique selon l'une des revendications 1 à 4, **caractérisé en ce que**, la majeure partie, cependant au moins la moitié du débit volumique dans le circuit (T₁₋ₙ) respectif, peut être absorbée par les servomoteurs hydrauliques (4) de la combinaison de moteurs hydrauliques (3, 4) de chaque circuit (T₁₋ₙ).

6. Entraînement hydrostatique selon l'une des revendications 1 à 5, **caractérisé en ce que** qu'un accumulateur basse pression (7) faiblement polarisé est disposé côté basse pression dans le retour (RP) dans au moins un circuit (T₁₋ₙ).

7. Entraînement hydrostatique selon l'une des revendications 2 à 6, **caractérisé en ce que** l'accumulateur haute pression (6) raccordé directement au côté haute pression (VM) d'un circuit partiel (T₁₋ₙ) est dimensionné de telle sorte qu'il absorbe et compense une augmentation de pression apparaissant brusquement, au d'un accumulateur de choc, décale suffisamment la fréquence propre de l'entraînement hydrostatique à partir de la plage de la fréquence d'excitation par le rotor (19) en rotation à la suite de son passage à travers la plage de pression dynamique avant le mât tout en empêchant largement des oscillations des générateurs synchrones (5) du fait de la régulation de variations de charge dans le réseau ou au niveau des consommateurs.

8. Entraînement hydrostatique selon l'une des revendications 1 à 7, **caractérisé en ce que** la soupape de surpression (16) disposée respectivement dans les circuits (T₁₋ₙ) peut être réglée de telle sorte qu'elle s'ouvre automatiquement lorsque sa pression de réponse est atteinte afin de limiter la pression maximale sur le côté haute pression (VP) et donc le couple opposé de façon maximale au rotor (19) par la pompe hydraulique (1), le fonctionnement de la soupape de surpression (16) pouvant, en cas de panne de celle-ci, être pris en charge automatiquement par la soupape de surpression de sûreté (17).

9. Entraînement hydrostatique selon l'une des revendications 6 à 8, **caractérisé en ce que** l'accumulateur basse pression (7) faiblement polarisé connecté au côté basse pression (RP) du circuit (T₁₋ₙ) hydraulique est dimensionné de telle sorte que le volume d'huile nécessaire pour le remplissage de l'accumulateur haute pression (6) peut être fourni par l'accumulateur basse pression (7) indépendamment du système d'alimentation.

10. Entraînement hydrostatique selon l'une des revendications 1 à 9, **caractérisé en ce que** en cas d'arrêt complet du rotor (19) dans l'état freiné, par exemple en cas de protection en cas de tempête ou en cas de calme plat, au moins un générateur synchrone (5) peut être utilisé en tant que machine déphaseuse parallèlement au réseau dans le fonctionnement en moteur, surexcité ou sous-excité, de telle sorte qu'il fournit de l'énergie réactive.

11. Entraînement hydrostatique selon l'une des revendications 1 à 10, **caractérisé en ce que**
la pompe hydraulique (1) peut être transférée dans le fonctionnement moteur, ce qui fait qu'une vitesse de rotation minimale raisonnable pour l'accélération peut être appliquée au rotor (19), laquelle vitesse peut en particulier être nécessaire quand les pales de rotor ne sont pas réglables ou deviennent non réglables au moyen du pitch.
